# EUROPÄISCHE PATENTSCHRIFT

(11) **EP 1 397 249 B1**
(45) Veröffentlichungstag und Bekanntmachung des Hinweises auf die Patenterteilung: **14.10.2009**
(21) Anmeldenummer: 02745332.3
(22) Anmeldetag: 31.05.2002
(51) Int. Cl.: B32B 27/32, G09F 3/04, B32B 5/18, B29C 55/12, B29C 49/24, C08K 5/00, C09J 123/08, C08L 23/08, C08L 33/00

(54) **FOLIE MIT VERBESSERTER SIEGEL- UND HAFTFÄHIGKEIT**
FILM HAVING AN IMPROVED SEALABILITY AND ADHERENCE
FILM AYANT UNE APTITUDE AU SCELLEMENT ET UNE ADHERENCE AMELIORES

(30) Priorität: 02.06.2001 DE 10127038
(43) Veröffentlichungstag der Anmeldung: 17.03.2004
(73) Patentinhaber: Treofan Germany GmbH & Co.KG, 66539 Neunkirchen (DE)
(72) Erfinder: HOLZER, Susanne, 66564 Ottweiler (DE); WIENERS, Gerhard, 60320 Frankfurt (DE)
(86) Internationale Anmeldenummer: PCT/EP2002/005946
(87) Internationale Veröffentlichungsnummer: WO 2002/098658

(56) Entgegenhaltungen:
- EP-A- 0 356 220
- EP-A- 0 616 885
- EP-A- 0 620 111
- DE-A- 1 769 434
- DE-A- 2 607 326
- US-A- 4 409 286
- US-A- 6 042 930

## Beschreibung

Die Erfindung betrifft eine Folie aus thermoplastischen Kunststoffen mit einer niedrigen Siegelanspringtemperatur und einer verbesserten Siegelfähigkeit und vielfältiger Haftfähigkeit. Die Folie haftet gegenüber Werkstoffen, die nicht auf Kunststoffen basieren, wie z.B. Glas, Metall, Holz, aber auch gegenüber verschiedenen Polymeren, wie z.B. PS, PET, PO. Die Erfindung betrifft auch die Verwendung der Folie und Verfahren zu ihrer Herstellung. Die Folie kann universell für verschiedene Anwendungen eingesetzt werden, wie beispielsweise im Verpackungssektor, zur Etikettierung und Schutzkaschierung, zur Kaschierung und Laminierung, sowie als Basisfolie für die Metallisierung. Des weiteren zeigt sie eine erhöhte Haftung gegenüber Kaltsiegelkleber, Druckfarben und diversen Beschichtungen, die nach der Folienherstellung aufgebracht werden.

Lebensmittel und andere Packgüter werden häufig in Verpackungsfolien eingeschweißt. Dabei kommen in hochwertigen Verpackungen Folien zum Einsatz, die zum Schutz der Bedruckung und zur Erhöhung des Glanzes mit Lacken beschichtet sind, wie z.B. PVDC- und Acryllacke. Dabei kann es je nach der Verpackungsmethode erforderlich sein, dass die Folieninnenseite gegen sich selbst (AA-Siegelungen) und gegen die lackierte Außenseite siegeln muß (AB-Siegelungen).

In anderen Bereichen der Lebensmittelverpackung kann je nach Packgut eine hohe Nahtdichtigkeit, z.B. bei Deckelfolien oder Verpackung von Trockenpulvern, erforderlich sein, um das Packgut vor Feuchtigkeit, Schädlingsbefall und Fremdkontamination während der zu schützen.

Seit der Entwicklung siegelfähiger Folien ist die Erniedrigung der Siegelanspringtemperatur eine ständige Forderung der Verpackungsindustrie. Niedrige Siegelanspringtemperaturen ermöglichen höhere Taktzeiten beim Verpacker, erniedrigen die Energiekosten und schonen temperaturempfindliche Packgüter beim Packprozeß.

Aus der britischen Anmeldung GB 2 223 446 "Courtauld" ist eine boPP-Folie bekannt, die aus mindestens zwei Schichten besteht, wobei die vergleichsweise dünnere Schicht aus einem Blend aus einem Material, das eine geringe Siegelnahtfestigkeit gegen PVDC aufweist, und einem Material, das aus einem Copolymer aus einem Alken und einer ungesättigten einbasigen Säure bzw. deren Ester besteht. In bevorzugten Ausführungsformen kommen als Materialien mit einer niedrigen Siegelnahtfestigkeit gegen PVDC Polyethylene hoher und niedriger Dichte in Betracht, als Copolymere solche des Ethylens mit Acrylsäureestern, wobei diese Copolymere in besonders bevorzugten Ausführungsformen ungesättigte zweibasige Säuren oder deren Anhydride wie z.B. Maleinsäureanhydrid als weitere Monomere enthalten können. Entsprechende Co- bzw. Terpolymere wurden in der EP 0 065 898 beschrieben. Allerdings führt dieses Verfahren mit den dort angegebenen Rezepturen in einem hohen und für die industrielle Praxis unerträglichen Maße zu Ablagerungen auf den Heiz- und Streckwalzen des Längsstreckwerks einer sequentiellen BOPP-Anlage.

In der deutschen Anmeldung 2000/N004 (Anmeldung Nr.: 100 46 543.9) wird ein Verfahren zur Herstellung einer boPP-Folie mit den in der GB 2 223 446 beschrieben Acrylsäure-modifizierten Copolymeren ohne Walzenablagerungen beschrieben. Die Folie besteht aus mindestens zwei Schichten, wobei die äußere Schicht aus einem Co- oder Terpolymer und einem Zusatzstoff besteht, der die Walzenablagerungen verhindert. Das Co- oder Terpolymer ist aus einem Alken und einer ungesättigten einbasigen Säure bzw. deren Ester besteht. Bevorzugt werden als Copolymere solche des Ethylens mit Acrylsäureestern, wobei diese Copolymere in besonders bevorzugten Ausführungsformen ungesättigte zweibasige Säuren oder deren Anhydride wie z.B. Maleinsäureanhydrid als weitere Monomere enthalten können. Entsprechende Co- bzw. Terpolymere wurden in der EP 0 065 898 beschrieben. Als Zusatzstoffe werden bevorzugt Polyethylenwachse, sowie geringe Mengen an Polyethylen, wie z.B. HDPE eingesetzt.

Im Stand der Technik sind Verfahren zum Etikettieren von Behältnissen aus thermoplastischen Polymeren bekannt, z.B. IML und Thermolabelling. Etikettieren nach dem In-Mould-Labelling (IML-Verfahren) wurde z.B. für Spritzguß, Dünnwandspritzguß, Blasformen sowie das Tiefziehen oder Thermoformen oder Spritzstreckblasen von Behältnissen vorgeschlagen oder bereits entwickelt.

Thermolabeling umfaßt alle Verfahren bei denen ein Etikett unter Einwirkung von Wärme auf ein separat hergestelltes Behältnis aufgebracht wird. Beispielsweise kann der bereits geformte Behälter in einem geeigneten Verfahren erhitzt und das Etikett mit Druck oder mit Hilfe von Bürsten oder Walzen so an die Behälterwandung angedrückt werden, daß es anschließend mit dem Behälter fest verbunden ist.

Des weiteren sind Verfahren zur Etikettierung von Behältern nach deren Herstellung oder nach deren Befüllung bekannt, wie z.B. die RundumEtikettierung, Patch-Labeling, Selbstklebeetiketten.

In der deutschen Anmeldung 2000/N005 (Anmeldung Nr.: 100 60 504.4) wird eine mindestens zweischichtige Folie beschrieben, die gute Hafteigenschaften gegenüber nicht-Polyolefin-basierenden Materialien aufweist. Diese Folie weist eine innere Deckschicht auf, die aus einem Copolymer aus einem Alken und einer ungesättigten einbasigen Säure bzw. deren Ester besteht. Bevorzugt werden als Copolymere solche des Ethylens mit Acrylsäureestern, wobei diese Copolymere in besonders bevorzugten Ausführungsformen ungesättigte zweibasige Säuren oder deren Anhydride wie z.B. Maleinsäureanhydrid als weitere Monomere enthalten können. Als Zusatzstoffe werden allgemein Polymere aus Polyolefinen ohne Carbonsäuremonomere, Polyethylenwachse oder Polyethylene, wie HDPE eingesetzt. Während herkömmliche boPP-Etiketten auch bei erhöhten Temperaturen, nicht auf Behältern aus PET, PS, PC oder PVC mittels In-Mould- oder Thermolabelling-Verfahren aufzubringen sind, wird hier erstmals eine Folie beschrieben, die auf nicht-Polyolefin-basierenden Materialien haftet.

Neben der Verpackung von Lebensmitteln spielt auch der Oberflächenschutz von Gebrauchsgegenständen eine wichtige Rolle. Auf kratzempfindliche und leicht zerbrechliche Materialien, wie z.B. Glas, wird zum Transport eine Schutzfolie aufgebracht, die sich später wieder problemlos entfernen lassen muß. Dazu ist ein gewisses Haftvermögen der Folie gegenüber dem zu schützenden Material erforderlich, damit die Schutzfolie nicht vorzeitig abfällt. Gleichzeitig, darf die Haftung aber auch nicht zu groß sein, damit ein spurenfreies Entfernen der Schutzfolie ermöglicht wird.

Die Aufgabe der vorliegenden Erfindung bestand darin, eine biaxial orientierte Polyolefinfolie zur Verfügung zu stellen, die verbesserte Siegel- und Hafteigenschaften aufweisen soll. Insbesondere soll die Folie besonders vielfältig oder universell einsetzbar sein, wie z.B. als niedrigsiegelnde Verpackungsfolie, Etiketten- und Deckelfolie für verschiedenste Substrate, abziehbare Schutzfolie, Kaschier- und Laminierfolie, Substrat für Beschichtungen aller Art, Metallisierung, Kaltsiegelkleber, Druckfarben etc. Zusätzlich ist es erforderlich, daß sich die Folie ohne Bildung von Ablagerungen auf den Walzen des Längsstreckwerks herstellen läßt. Darüber hinaus sollen die anderen wichtigen Gebrauchseigenschaften der Folie nicht nachteilig beeinflußt werden.

Diese Aufgabe wird gelöst durch eine mehrschichtige biaxial orientierte Polyolefinfolie aus einer Basisschicht und mindestens einer ersten Zwischenschicht und einer auf dieser Zwischenschicht aufgebrachten ersten Deckschicht, wobei diese Zwischenschicht aus einem Terpolymeren I aufgebaut ist, welches aus drei verschiedenen Monomeren (a), (b) und (c) besteht, wobei (a) ein Olefin und (b) eine ungesättigte Carbonsäuren oder deren Ester und (c) ein von (b) verschiedener Carbonsäureester oder ein Carbonsäureanhydrid ist und die Deckschicht ein Copolymer I enthält, welches aus einem Olefin und einer ungesättigte Carbonsäure oder deren Estern besteht und die Deckschicht zusätzlich höchstens 30 Gew.-% eines Zusatzstoffes enthält, wobei sich die Angaben in Gew.-% jeweils auf das Gewicht der Deckschicht beziehen. Die Unteransprüche geben bevorzugte Ausführungsformen der Erfindung an.

Es wurde überraschenderweise gefunden, daß ein Schichtaufbau aus der angegebenen ersten Deckschicht mit der darunter liegenden ersten Zwischenschicht erhebliche Vorteile gegenüber den bekannten Deckschichten aus den besagten Co- und/oder Terpolymeren hat. Die Deckschicht aus einem Copolymer I aus Olefinen und ungesättigten Carbonsäuren oder deren Ester in Verbindung mit der Zwischenschicht aus einem Terpolymer I aus (a) Olefinen, (b) einer ungesättigten Carbonsäure oder deren Ester, und (c) einem von (b) verschiedenen ungesättige Carbonsäuren oder Carbonsäurester oder Carbonsäureanhydrid bewirkt eine unerwartete Verbesserung der Siegel- und Hafteigenschaften, im Sinne einer synergistischen Wirkung der beiden Schichten. Dieser Schichtaufbau funktioniert wie eine thermisch aktivierbare Kleberschicht. Bei Raumtemperatur verblockt und verklebt die Folie nicht und ist daher als Rollenware ohne zusätzliche Releaseschicht verarbeitbar. Die Folien kann ohne Probleme gewickelt, bedruckt und geschnitten werden. Erst bei Temperaturen oberhalb von 70°C verklebt die Folie auf der Oberflächen von verschiedenen Materialien hervorragend und kann daher sehr vielseitig verwendet werden.

Folien mit dieser Kombination aus erster Zwischenschicht und erster Deckschicht aus den genannten Co- und Terpolymeren I zeigen hervorragende Siegeleigenschaften gegenüber sich selbst, Polyolefin- sowie nicht Polyolefin-basierenden Materialien und eine hervorragende Haftung gegenüber den verschiedensten Polymer-Materialien, aus denen üblicherweise Behälter geformt werden. Damit kann eine niedrigsiegelnde Folie mit verbesserten Siegel- und Hafteigenschaften auch gegenüber nicht Polyolefin-basierenden Materialien mit universellem Anwendungsspektrum in einer bisher nicht möglichen Breite zur Verfügung gestellt werden. Die Folie kann als Verpackungs-, Schutz- und Etiketten- und Deckelfolie vorteilhaft verwendet werden, ist aber auch für die Metallisierung, Laminierung und Kaschierung geeignet. Als Verpackungsfolie zeigt die Folie eine sehr gute Nahtdichtigkeit und ist daher auch für die Verpackung von Trockenpulvern geeignet. Des weiteren ist die Folie als Substrat für verschiedenste Beschichtungen, für Druckfarben und Kaltsiegelkleber sehr gut geeignet.

Für diese guten Hafteigenschaften ist der Aufbau und die Zusammensetzung der ersten Deckschicht in Verbindung mit dem Aufbau und der Zusammensetzung der darunter liegenden ersten Zwischenschicht wesentlich.

Es ist erfindungswesentlich, daß eine geringe Menge eines Zusatzstoffes in der ersten Deckschicht aus Copolymer I enthalten ist. Es wurde gefunden, daß diese Zusatzstoffe Walzenablagerungen bei der Herstellung der Folie wirksam verhindern und gleichzeitig die gewünschten guten und vielfältigen Hafteigenschaften der Folie nicht beeinträchtigt werden. Insbesondere wurde festgestellt, daß eine Deckschicht ohne Zusatzstoffe, welche nur aus dem Copolymer I aufgebaut ist, bei der Herstellung der Folie derartig auf den Walzen verklebt oder Ablagerungen bildet, daß eine Handhabung des Materials im Herstellprozeß der Folie nahezu unmöglich ist.

Die erste Deckschicht enthält als erfindungswesentliche Bestandteile ein Copolymer I aus einem Olefin und einer ungesättigten Carbonsäuren oder deren Ester und einen Zusatzstoff. Gegebenenfalls enthält die erste Deckschicht zusätzlich Antiblockmittel. Im allgemeinen enthält die erste Deckschicht mindestens 70 Gew.-%, vorzugsweise 90 bis 99,5 Gew.-%, insbesondere 96 bis 99 Gew.-% des Copolymeren I und höchstens 30 Gew.-%, vorzugsweise 0,5 bis 10 Gew.-%, insbesondere 1 bis 6 Gew.-% des Zusatzstoff, jeweils bezogen auf das Gewicht der ersten Deckschicht.

Für die Anwendung als Schutzfolie, beispielsweise für Glas oder Metall, kann der Anteil an Zusatzstoff in der ersten Deckschicht bis zu 50 Gew% betragen und liegt vorzugsweise im Bereich von 20 bis 40 Gew.-%. Dadurch können die jeweils gewünschten Haft- oder Siegeleigenschaften innerhalb weiter Grenzen varriert und für den jeweiligen Verwendungszweck optimal eingestellt werden kann. Beispielsweise können Folien mit Haftfestigkeiten <0,5 N/15mm hergestellt werden, welche sich zum Einsatz als Schutzfolie besonders eignen, da die Haftfestigkeit hoch genug ist, daß die Folie sich nicht unkontrolliert von der zu schützenden Oberfläche ablöst.

Geeignete Copolymere I der ersten Deckschicht sind aus Olefinen und ungesättigten Carbonsäuren oder deren Ester als Monomere aufgebaut. Olefine sind beispielsweise Ethylen, Propylen oder Buten-1, ggf. auch höhere Homologe wie z.B. Hexen oder Octen. Als ungesättigte Carbonsäuren sind Acrylsäure oder Methacrylsäure sowie deren Ester bevorzugt. Grundsätzlich kann das Copolymer I aus verschiedenen Olefinen und verschiedenen ungesättigten Carbonsäuren oder deren Ester, aufgebaut sein. Besonders vorteilhaft sind Copolymere I aus Ethylen und Acrylsäureester oder Methacrylsäureester.

Die Ester der beschriebenen ungesättigten Carbonsäuren der Copolymeren I leiten sich von einem oder mehreren niederen Alkoholen ab. Geeignet sind beispielsweise Methyl-, Ethyl-, n-Propyl-, i-Propyl-, n-Butyl-, i-Butyl-, sec-Butyl- oder tert.-Butyl-Ester.

Die Zusammensetzung der Copolymeren I aus den jeweiligen Monomeren kann innerhalb der nachstehend beschriebenen Grenzen variieren. Copolymere I enthalten im allgemeinen mindestens 60 Gew.-%, vorzugsweise 70 bis 97 Gew.-% Olefin, vorzugsweise Ethylen und höchstens 40 Gew.-%, vorzugsweise 3 bis 30 Gew.-% ungesättigte Carbonsäuren oder deren Ester, vorzugsweise Acrylsäure oder Methacrylsäure oder deren Ester.

Die vorstehend beschriebenen Copolymeren I der ersten Deckschicht haben im allgemeinen einen Schmelzpunkt von 40 bis 120°C, vorzugsweise 60 bis 100°C. Der Vicatpunkt liegt vorzugsweise im Bereich von 30 bis 90°C. Der Schmelzindex beträgt im allgemeinen 0,1 bis 20 g/10min (190°C, 21,6N), vorzugsweise 0,1 bis 15 g/10min.

Als weitere wesentliche Komponente enthält die erste Deckschicht einen Zusatzstoff in einer Menge von 1 bis 30 Gew.-%, im Falle von Schutzfolienanwendungen bis zu 50 Gew.-%, bezogen auf das Gewicht der ersten Deckschicht. Zusatzstoffe sind beispielsweise Wachse, Polypropylene, Polyethylene, Polystyrol, Polyester, Polyamide oder Kohlenwasserstoffharze,

Als Zusatzstoff kann beispielsweise ein Wachs, vorzugsweise Polyethylenwachse oder Paraffine eingesetzt werden. Polyethylenwachse sind niedrigmolekulare Polymere, die im wesentlichen aus Ethyleneinheiten aufgebaut und teil- oder hochkristallin sind. Die Polymerketten aus den Ethyleneinheiten sind langgestreckte Moleküle, die verzweigt sein können, wobei kürzere Seitenketten überwiegen. Vorzugsweise haben die Polyethylenwachse ein mittleres Molekulargewicht Mn (Zahlenmittel) von 200 bis 5000, vorzugsweise von 400 bis 2000, besonders bevorzugt 400 bis 1000 und vorzugsweise eine Molekulargewichtsverteilung (Polydispersität) Mw/Mn von unter 3, vorzugsweise 1 bis 2. Der Schmelzpunkt liegt im allgemeinen im Bereich von 70 bis 150°C, vorzugsweise 80 bis 100°C.

Paraffine umfassen makrokristalline Paraffine (Paraffinwachse) und mikrokristalline Paraffine (Mikrowachse). Die makrokristallinen Paraffine werden aus den Vakuumdestillatfraktionen bei der Verarbeitung von Schmierölen gewonnen. Die mikrokristallinen Paraffine stammen aus den Rückständen der Vakuumdestillation und den Sedimenten paraffinischer Rohöle (Ausscheidungsparaffine). Die makrokristallinen Paraffine bestehen überwiegend aus n-Paraffinen, die zusätzlich je nach Raffinationsgrad iso-Paraffine, Naphtene und Alkylaromaten enthalten. Die mikrokristallinen Paraffine bestehen aus einem Gemisch von Kohlenwasserstoffe, die bei Raumtemperatur vorwiegend fest sind. Anders als bei den makrokristallinen Paraffinen sind die iso-Paraffine und naphtenische Paraffine vorherrschend. Die mikrokristallinen Paraffine zeichnen sich durch das Vorhandensein von kristallisationshemmenden, stark verzweigten iso-Paraffinen und Naphtenen aus. Für die Zwecke der Erfindung sind Paraffine mit einem Schmelzpunkt von 60 bis 100°C, vorzugsweise 60 bis 85°C besonders geeignet.

Weitere geeignete Zusatzstoffe sind Polypropylene wie die nachstehend beschriebene Co- und Terpolymere II, Polyethylene, wobei sowohl lineare als auch verzweigte Polyethylene grundsätzlich geeignet sind, beispielsweise LLDPE, LDPE oder HDPE, MDPE, VLDPE, natürliche oder synthetische Harze mit einem Erweichungspunkt von 80-180°C, wie z.B. Kohlenwasserstoffharze, Ketonharze, Kolophonium, Dammarharze, Polyamidharze sowie aliphatische und aromatische Kohlenwasserstoffharze, Polymere wie EMA, EBA, EVA.

Gegebenenfalls kann die erste Deckschicht auch Mischungen der vorstehend genannten Zusatzstoffe enthalten, wobei insbesondere Mischungen aus Wachs und Polyethylen oder Polypropylen bevorzugt sind. Dabei sind Kombinationen von 1-10 Gew.-% Wachs und 1-10 Gew.-% Polyethylen oder Propylen-Copolymer hinsichtlich der Ablagerungen bei der Folienherstellung besonders vorteilhaft, ohne die Hafteigenschaften der Folie zu mindern.

Die erste Deckschicht kann zusätzlich übliche Additive wie Neutralisationsmittel, Stabilisatoren, Antistatika, Antiblockmittel und/oder Gleitmittel in jeweils wirksamen Mengen enthalten. Die nachstehenden Angaben in Gew.-% beziehen sich jeweils auf das Gewicht der inneren Deckschicht. Insbesondere sind Ausführungsformen bevorzugt, die zusätzlich Antiblockmittel in der inneren Deckschicht enthalten. Es wurde gefunden, daß das Antiblockmittel zur Verringerung der Ablagerungen (pick-off) bei der Herstellung der Folie beiträgt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Siliciumdioxid und Calciumcarbonat sind bevorzugt. Die mittlere Teilchengröße liegt zwischen 1 und 6 µm, insbesondere 2 und 5 µm. Die wirksame Menge an Antiblockmittel liegt im Bereich von 0,1 bis 5 Gew.-%, vorzugsweise 0,5 bis 3 Gew.-%, insbesondere 0,8 bis 2 Gew.-%. Bei Zusatz von Antiblockmittel (oder anderen zusätzlichen Additiven) wird der Anteil an Copolymer I in der ersten Deckschicht entsprechend reduziert.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-% bezogen auf die Deckschicht. Besonders geeignet ist der Zusatz von 0,01 bis 0,3 Gew.% aliphatischer Säureamide, wie Erucasäureamid oder 0,02 bis 0,5 Gew.-% von Polydimethylsiloxanen, insbesondere Polydimethylsiloxane mit einer Viskosität von 5 000 bis 1 000 000 mm²/s.

In einer bevorzugten Ausführungsform wird die Oberfläche der ersten Deckschicht Corona-, Plasma- oder Flamm-behandelt. Es wurde gefunden, daß eine derartige Oberflächenbehandlung, insbesondere die Corona- behandlung die Haftfestigkeit der ersten Deckschicht gegenüber den verschiedenen Polymer-Materialien verbessert.

Die Dicke der ersten Deckschicht ist im allgemeinen größer als 1 µm und liegt vorzugsweise im Bereich von 1,5 bis 5 µm, insbesondere 2 bis 3 µm.

Die erste Zwischenschicht befindet sich zwischen der Basisschicht und der ersten Deckschicht. Aufbau und Zusammensetzung der ersten Zwischenschicht in Kombination mit dem Aufbau der ersten Deckschicht sind wesentlich für die guten und vielfältigen Siegel- und Hafteigenschaften der Folie.

Die innere Zwischenschicht enthält als erfindungswesentlichen Bestandteil ein Terpolymer I, welches im allgemeinen aus drei verschiedenen Monomeren (a), (b) und (c) aufgebaut ist. Zu den Monomeren (a) gehören Olefine wie beispielsweise Ethylen, Propylen oder Buten-1, ggf. auch höhere Homologe wie z.B. Hexen oder Octen. Die Monomeren (b) sind ungesättigte Carbonsäuren oder deren Ester, Monomere (c) sind von (b) verschiedene Carbonsäuren oder Carbonsäureester oder Carbonsäureanhydride. Als Monomer (c) sind ungesättigte Monocarbonsäureester, beispielsweise Glycidylmethacrylat, oder ungesättigte Dicarbonsäuren oder deren Anhydrid, wie beispielsweise Maleinsäure oder Maleinsäureanhydrid bevorzugt. Besonders vorteilhaft sind Terpolymere aus (a) Ethylen, (b) Acrylsäure oder Methacrylsäure oder deren Ester und (c) Glycidylmethacrylat oder Maleinsäureanhydrid.

Die Ester der beschriebenen ungesättigten Carbonsäuren der Terpolymeren I leiten sich von einem oder mehreren niederen Alkoholen ab. Geeignet sind beispielsweise Methyl-, Ethyl-, n-Propyl-, i-Propyl-, n-Butyl-, i-Butyl-, sec-Butyl- oder tert.-Butyl-Ester.

Die Zusammensetzung der Terpolymeren I aus den jeweiligen Monomeren kann innerhalb der nachstehend beschriebenen Grenzen variieren. Terpolymere I enthalten im allgemeinen
(a) 65 bis 96 Gew.-%, vorzugsweise 72 bis 93 Gew.-% Olefin, vorzugsweise Ethylen und
(b) 3 bis 34 Gew.-%, vorzugsweise 5 bis 26 Ges.-% ungesättigte Carbonsäuren oder deren Estern, vorzugsweise Acrylsäure oder Methacrylsäure oder deren Ester und
(c) 1 bis 10 Gew.-%, vorzugsweise 2 bis 8 Gew.-% von (b) verschiedene ungesättigte Carbonsäuren oder Carbonsäureester oder Carbonsäureanhydride, vorzugsweise Maleinsäureanhydrid oder Glycidylmethacrylat.

Die vorstehend beschriebenen Terpolymeren I der ersten Deckschicht haben im allgemeinen einen Schmelzpunkt von 40 bis 120°C, vorzugsweise 60 bis 100°C. Der Vicatpunkt (nach DIN 53460) liegt vorzugsweise im Bereich von 30 bis 90°C. Der Schmelzindex beträgt im allgemeinen 0,1 bis 20 g/10min (190°C, 21,6N), vorzugsweise 0,1 bis 15 g/10min.

Die erste Zwischenschicht enthält im allgemeinen mindestens 70 bis 100 Gew.-% des vorstehend beschriebenen Terpolymeren I, vorzugsweise >90 bis <100 Gew.-%, bezogen auf das Gewicht der Zwischenschicht. Die erste Zwischenschicht kann zusätzlich übliche Additive wie Neutralisationsmittel, Stabilisatoren, Antistatika, Antiblockmittel und/oder Gleitmittel in jeweils wirksamen Mengen enthalten, wie sie bereits für die erste Deckschicht erwähnt wurden. Gegebenenfalls ist auch die Einarbeitung von bis zu 30 Gew.-% vorzugsweise < 10 Gew.-% an Zusatzstoffen, die bereits für die Deckschicht beschrieben sind, in der Zwischenschicht möglich. Auch für die Zwischenschicht sind Wachse, Polyethylene und Propylencopolymere, wenn vorhanden, bevorzugt. Bei Einarbeitung dieser Zusatzstoffe oder Zusatz von üblichen Additiven wird der Anteil an Terpolymer I in der ersten Zwischenschicht entsprechend reduziert.

Die erste Zwischenschicht weist im allgemeinen eine Dicke von mindestens 1 bis 15µm, vorzugsweise 2 bis 10µm.

Erfindungsgemäß weisen Folien, die mit der oben beschriebenen Kombination aus erster Deckschicht und erster Zwischenschicht besonders vielseitig und hervorragende Hafteigenschaften auf, wodurch die erfindungsgemäße Folie für eine Vielzahl von Anwendungen eingesetzt werden kann. Es wurde gefunden, daß die Hafteigenschaften gegenüber üblichen biaxial orientierten Polypropylenfolien deutlich verbessert sind.

Darüber hinaus wurde gefunden, daß die Kombination aus erster Zwischenschicht und erster Deckschicht hinsichtlich der Siegelnahtfestigkeit synergistisch zusammenwirkt. Die Siegelnahtfestigkeit der ersten Deckschicht in einem analogen Folienaufbau ohne die beschriebene erste Zwischenschicht beträgt maximal 0,5 N/15mm bei Temperaturen von bis zu 120°C (Siegeldruck 10N/cm2; Anpreßzeit 0,5 s). Läßt man die erste Deckschicht weg und siegelt unter gleichen Bedingungen die Oberfläche der ersten Zwischenschicht gegen sich selbst, werden Siegelnahtfestigkeiten von 1,5 N/15mm selbst bei höheren Temperaturen von 125°C kaum überschritten. Für die erfindungsgemäße Folie mit aufeinanderliegender erster Zwischen- und Deckschicht wurden Siegelnahtfestigkeiten (bei gleichen Siegelbedingungen) von mindesten 2,0 N/15mm ab Siegeltemperaturen von 100°C zuverlässig erreicht. Bei höheren Siegeltemperaturen von 120 bis 125°C stiegen die Siegelnahtfestigkeiten auf Werte von bis zu 2,7 N/15mm.

Bei der Verwendung der Folie als Etikett im IML-Verfahren oder nach dem Thermolabelling-Verfahren zeigt die Folie ohne weiteren Auftrag zusätzlicher Kleber- oder Haftschichten eine sehr gute Haftfestigkeit bei Erwärmung >70°C nicht nur gegenüber PP und PE-Behältern, sondern auch gegenüber PVC-, PS- und PET-Behältern oder anderen Materialien. Die Folie kann daher sehr gut mittels dieser üblichen Etikettierverfahren auf beliebige Gefäße appliziert werden.

Die guten Hafteigenschaften ermöglichen weiterhin die Verwendung als Deckelfolie für beliebige Behälter aus Materialien wie PP, PE, PVC-, PS- oder PET. Es wurde gefunden, daß die Folie zuverlässig eine dichte Naht bildet und sich dennoch beim Öffnen rückstandfrei abziehen läßt.

Ausführungsformen mit einem hohen Anteil an Zusatzstoff von über 15 Gew.-%, vorzugsweise 20 Gew.-% in der ersten Deckschicht sind als abziehbare Schutzfolie, beispielsweise auf Holz-, Glas-, kratzempfindlichen Kunststoff- und Metalloberflächen, sehr gut zu verwenden. Die Folie wird bei erhöhter Temperatur auf die zu schützende Oberfläche appliziert und haftete zunächst sehr gut und schützt die jeweilige Oberfläche vor Kratzern oder sonstigen Beschädigungen während des Transports oder der Lagerung. Anschließend lässt sie sich auch nach einem längeren Zeitraum in einem Stück rückstandfrei wieder abziehen, ohne daß Klebstoffreste auf der Oberfläche des Gebrauchsgegenstandes zurückbleiben.

Die Oberfläche des erfindungsgemäßen Schichtaufbaus aus erster Zwischenschicht und erster Deckschicht eignet sich darüber hinaus hervorragend für die Applikation von Druckfarben, Beschichtungen und Kaltsiegelklebern, sowie für die Metallisierung. Dabei ist es überraschenderweise nicht notwendig zur Erzielung einer guten Haftfestigkeit einen Primer oder andere Haftvermittler aufzubringen.

In einer weiteren Anwendung kann die Folie zur Kaschierung oder Laminierung bei erhöhten Temperaturen eingesetzt werden. Diese Verfahren werden bei einer Temperatur von >70°C durchgeführt. Als Substrate können wiederum verschiedenste Materialien eingesetzt werden, worunter Papier, Holz, andere thermoplastische Folien, Metall, z.B. Aluminium oder Weißblech, bevorzugt sind. Auch hierbei wird kein zusätzlicher Kleber oder Haftvermittler wie sonst üblich benötigt.

Die erfindungemäße Folie kann als niedrig siegelnde Verpackungsfolie auf horizontalen und vertikalen Verpackungsmachinen eingesetzt werden. Außerdem siegelt die Folie gegen Lacke, wie PVDC- und Acryllacke, wobei hohe Siegelnahtfestigkeiten und -dichten erreicht werden. Unter den verschiedenen Verpackungsanwendungen sind auch Verpackungen für Trockenpulver möglich. Hier wurde gefunden, daß die Siegelung der ersten Deckschicht auch bei Verunreinigungen des Siegelbereiches durch das pulverförmige Packgut noch zuverlässig möglich ist. Eine hohe Nahtdichtigkeit der Siegelnaht stellt sicher, daß das Pulver nicht durch eindringende Feuchtigkeit verklumpt oder verdirbt.

Die vorstehend beschriebene Kombination aus erster Zwischenschicht und erster Deckschicht kann vorteilhaft auf transparente oder opaken Basisschichten aufgebracht werden. "Opake Folie" oder "opake Schicht" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die Basisschicht der Folie enthält für transparente Ausführungsformen im allgemeinen mindestens 85-100 Gew.-%, vorzugsweise 90 bis <100 Gew.-%, insbesondere 95 bis 99 Gew.-%, jeweils bezogen auf die Basisschicht, eines Polyolefins. Polyolefine sind beispielsweise Polyethylene, Polypropylene, Polybutylene oder Mischpolymerisate aus Olefinen mit zwei bis acht C-Atomen, worunter Polyethylene und Polyproyplene bevorzugt sind.

Im allgemeinen enthält das Propylenpolymer mindestens 90 Gew.-%, vorzugsweise 94 bis 100 Gew.-%, insbesondere 98 bis <100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 140 bis 170°C, vorzugsweise von 155 bis 165°C, und einen Schmelzflußindex (Messung DIN 53 735 bei 21,6 N Belastung und 230 °C) von 1,0 bis 10g/10min, vorzugsweise von 1,5 bis 6,5g/10min. Der n-heptanlösliche Anteil des Polymeren beträgt im allgemeinen 1 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels M_{w} zum Zahlenmittel Mₙ liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren der Basisschicht erreicht man beispielsweise durch dessen peroxidischen Abbau oder durch Herstellung des Polypropylens mittels geeigneter Metallocenkatalysatoren.

In einer bevorzugten Ausführungsformen ist die Basisschicht durch Zusatz von Füllstoffen opak. Im allgemeinen enthält die Basisschicht in dieser Ausführungsform mindestens 70 Gew.-%, vorzugsweise 75 bis 99 Gew.-%, insbesondere 80 bis 98 Gew.-%, jeweils bezogen auf das Gewicht der Basisschicht, der vorstehend beschriebenen Polyolefine bzw. Propylenpolymeren, wobei ebenfalls die beschriebenen Propylenhomopolymere bevorzugt sind.

Die opake Basisschicht enthält Füllstoffe in einer Menge von maximal 30 Gew.-%, vorzugsweise 1 bis 25 Gew.-%, insbesondere 2 bis 20 Gew.-%, bezogen auf das Gewicht der Basisschicht. Füllstoffe sind im Sinne der vorliegenden Erfindung Pigmente und/oder vakuoleninizüerende Teilchen.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. "Pigmente" haben im allgemeinen einen mittleren Teilchendurchmesser von 0,01 bis maximal 1 µm, vorzugsweise 0,01 bis 0,7 µm , insbesondere 0,01 bis 0,4 µm. Pigmente umfassen sowohl sogenannte "Weißpigmente", welche die Folien weiß einfärben, als auch "Buntpigmente", welche der Folie eine bunte oder schwarze Farbe verleihen. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propen, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die opake Basisschicht enthält Pigmente vorzugsweise in einer Menge von 0,5 bis 10 Gew.-%, vorzugsweise 1 bis 8 Gew.-%, insbesondere 1 bis 5 Gew.-%, Vakuoleniniziierende Füllstoffe sind im allgemeinen in einer Menge von 0,5 bis 30 Gew.-%, vorzugsweise 1 bis 15 Ges.-%, insbesondere 1 bis 10 Gew.-% enthalten. Die Angaben beziehen sich auf das Gewicht der Basisschicht.

Die Dichte der Folie kann je nach Zusammensetzung der Basisschicht in einem Bereich von 0,4 bis 1,1 g/cm³ variieren. Dabei tragen Vakuolen zu einer Erniedrigung der Dichte bei, wohingegen TiO₂ auf Grund seines höheren spezifischen Gewichts die Dichte der Folie erhöht. Vorzugsweise beträgt die Dichte der Folie 0,5 bis 0,95 g/cm³.

Zusätzlich kann die Basisschicht, sowohl in einer transparenten, als auch in einer opaken Ausführungsform übliche Additive wie Neutralisationsmittel, Stabilisatoren, Antistatika und/oder Gleitmittel in jeweils wirksamen Mengen enthalten. Die nachstehenden Angaben in Gew.-% beziehen sich jeweils auf das Gewicht der Basisschicht.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignete aliphatische Säureamide sind Erucasäureamid und Stearylamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische und phosphitische Stabilisatoren. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4 Gew.-%, insbesondere 0,1 bis 0,25 Gew.-% eingesetzt.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g. Menge: 0,02-0,1%.

Für dreischichtichtige Ausführungsformen der erfindgsgemäßen Folie, welche nur aus der Basisschicht, der ersten Zwischenschicht und der ersten Deckschicht bestehen, ist es bevorzugt, daß die äußere Oberfläche der Basisschicht mittels Corona-, Flamme- oder Plasma oberflächenbehandelt wird.

Die erfindungsgemäße Polyolefinfolie weist vorzugsweise eine zweite Deckschicht auf, welche eine gute Haftung gegenüber üblichen Druckfarben, Klebern, sowie Beschichtungen und/oder Lacken zeigt. Diese zweite Deckschicht der Folie ist vorzugsweise auf der gegenüberliegenden Oberfläche der Basisschicht aufgebracht und wird nachstehend "zweite Deckschicht" genannt. Zur weiteren Verbesserung der Haftung von Druckfarben, Klebern und Beschichtungen ist es bevorzugt eine Corona-, Plasma- oder Flammbehandlung der Oberfläche der zweiten Deckschicht durchzuführen.

Die zweite Deckschicht ist im allgemeinen aus Polymeren aus Olefinen mit 2 bis 10 Kohlenstoffatomen aufgebaut. Die zweite Deckschicht enthält im allgemeinen 95 bis 100 Gew.-% Polyolefin, vorzugsweise 98 bis <100Gew.-% - Polyolefin, jeweils bezogen auf das Gewicht der Deckschicht/en.

Beispiele für geeignete olefinische Polymere der zweiten Deckschicht/en sind Propylenhomopolymere, Co- oder Terpolymere II aus Ethylen- Propylen und/oder Butyleneinheiten oder Mischungen aus den genannten Polymeren. Diese Co- oder Terpolymere II enthalten keine Carbonsäuremonomeren (bzw. Ester davon). Es sind Polyolefine. Hierunter sind bevorzugte Polymerisate statistische Ethylen-Propylen-Copolymere mit einem Ethylengehalt von 1 bis 10 Gew.-%, bevorzugt 2,5 bis 8 Gew.-%, oder
statistische Propylen-Butylen-1-Copolymere mit einem Butylengehalt von 2 bis 25 Gew.-%, bevorzugt 4 bis 20 Gew.-%, oder
statistische Ethylen-Propylen-Butylen-1-Terpolymere mit einem Ethylengehalt von 1 bis 10 Gew.-% und einem Butylen-1-Gehalt von 2 bis 20 Gew.-%, oder eine Mischung oder ein Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%. Die Angaben in Gew.-% beziehen sich jeweils auf das Gewicht des Polymeren.

Die in der zweiten Deckschicht eingesetzten vorstehend beschriebenen Co- und/oder Terpolymeren II weisen im allgemeinen einen Schmelzflußindex von 1,5 bis 30g/10min, vorzugsweise von 3 bis 15g/10min, auf. Der Schmelzpunkt liegt im Bereich von 120 bis 140°C. Das vorstehend beschriebene Blend aus Co- und Terpolymeren II hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Gegebenenfalls können alle vorstehend beschriebenen Deckschichtpolymeren peroxidisch oder auch thermooxidativ abgebaut sein, wobei der Abbaufaktor im allgemeinen in einem Bereich von 1 bis 15, vorzugsweise 1 bis 8 liegt.

Gegebenenfalls können der zweiten Deckschicht die vorstehend beschriebenen Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der Deckschicht.

Geeignete Antiblockmittel sind bereits im Zusammenhang mit der ersten Deckschicht beschrieben. Diese Antiblockmittel sind auch für die zweite Deckschicht geeignet. Die bevorzugte Menge an Antiblockmittel liegt für die zweite Deckschicht im Bereich von 0,1 bis 2 Gew.-%, vorzugsweise 0,1 bis 0,8 Gew.-%.

Die Dicke der zweiten Deckschicht ist im allgemeinen größer als 0,1 µm und liegt vorzugsweise im Bereich von 0,1 bis 5 µm, insbesondere 0,3 bis 2 µm.

In einer besonders bevorzugten Ausführungsform wird die Oberfläche der zweiten Deckschicht Corona-, Plasma- oder Flamm-behandelt. Diese Behandlung dient dazu, die Folienoberfläche für eine anschließende Dekoration und Bedruckung vorzubereiten, d.h. die Benetzbarkeit mit und Haftung von Druckfarben und sonstigen Dekorationsmitteln zu gewährleisten.

Die erfindungsgemäße Folie umfaßt mindestens die vorstehend beschriebene Basisschicht, die erste Deckschicht und die erste Zwischenschicht, aus Co- bzw. Terpolymer I und Zusatzstoff, sowie gegebenenfalls zusätzlich die beschriebene zweite Deckschicht. In einer weiteren vorteilhaften Ausführungsform ist auf der gegenüberliegenden Oberfläche der Basisschicht eine zweite Zwischenschicht aufgebracht, woraus 5-schichtige Folien resultieren.

Diese zweite Zwischenschicht/en kann aus den für die Basisschicht bzw. für die zweite Deckschichten beschriebenen olefinischen Polymeren, vorzugsweise Propylenpolymeren aufgebaut sein. Die zweite Zwischenschicht kann die für die einzelnen Schichten beschriebenen üblichen Additive wie Antistatika, Neutralisationsmittel, Gleitmittel und/oder Stabilisatoren sowie gegebenenfalls TiO₂ zur Verbesserung von Opazität und Weißgrad bei opaken Ausführungsformen, enthalten. Die Dicke dieser zweiten Zwischenschicht ist größer als 0,5 µm und liegt vorzugsweise im Bereich von 0,6 bis 4 µm, insbesondere 0,8 bis 3 µm.

Die zweite Zwischenschicht, die zwischen der zweiten Deckschicht und der Basisschicht aufgebracht sein kann ( nachstehend zweite Zwischenschicht) kann migrierende Additive enthalten und trägt in einer besonderen Ausführungsform zu einem hohen Glanz der Folie bei, insbesondere ungefüllte äußere Zwischenschichten aus Propylenhomopolymer. Für Ausführungsformen bei denen ein weißes oder opakes Erscheinungsbild des Etiketts gewünscht ist enthält die äußere Zwischenschicht vakuoleniniziierenden Füllstoffen und/oder Pigmente, insbesondere CaCO₃ und TiO₂, die für eine besonders hohe Deckkraft sorgen. Die Dicke dieser äußeren Zwischenschicht ist größer als 0,3 µm und liegt vorzugsweise im Bereich von 1,0 bis 15 µm, insbesondere 1,5 bis 10 µm.

Die Gesamtdicke der erfindungsgemäßen drei-, vier- oder fünfschichtigen Folie kann innerhalb weiter Grenzen variieren und richtet sich nach dem beabsichtigten Einsatz. Sie beträgt vorzugsweise 15 bis 150 µm, insbesondere 20 bis 100 µm, vorzugsweise 25 bis 90 µm. Dabei macht die Basisschicht etwa 40 bis 99 % der Gesamtfoliendicke aus.

Die Erfindung betrifft weiterhin ein Verfahren zur Herstellung der erfindungsgemäßen Polyolefinfolie nach dem an sich bekannten Coextrusionsverfahren. Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasmacorona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100°C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 70 bis 130°C, Vorzugsweise 80 bis 110°C, zweckmäßigerweise mit Hilfe zweier entsprechend dem angestrebten Streckverhältnis verschieden schnellaufender Walzen durchführen und das Querstrecken vorzugsweise bei einer Temperatur von 120 bis 180 °C mit Hilfe eines entsprechenden Kluppenrahmens. Die Längsstreckverhältnisse liegen im Bereich von 3 bis 8 vorzugsweise 4 bis 6. Die Querstreckverhältnisse liegen im Bereich von 5 bis 10, vorzugsweise 7 bis 9.

Grundsätzlich ist es für die Längsstreckung einer Folie mittels Walzen erforderlich die Folie durch den Walzenkontakt auf eine Mindesttemperatur zu erwärmen, damit eine gleichmäßige Verstreckung möglich ist. Im Zusammenhang mit der vorliegenden Erfindung wurde gefunden, daß die Deckschichten aus Copolymer I verstärkt dazu neigt auf den Walzen des Längsstreckwerks zu verkleben. Es zeigte sich, daß eine Folie deren Deckschicht nur aus Copolymer I besteht im üblichen Stenterprozeß nicht mittels Walzen in Längsrichtung verstreckt werden kann. Sind die Temperaturen zu hoch führen Ablagerungen auf den Längsstreckwalzen zu optischen Defekten. Bei niedrigeren Temperaturen kommt es zu Streckbögen und Abrissen. Es konnte ohne Zusatzstoffe kein geeigneter Temperaturbereich gefunden werden, in dem die Folie im Produktionsmaßstab herstellbar ist.

Überraschenderweise werden durch die beschriebenen Zusatzstoffe in der Deckschicht die Klebeneigung des Deckschichtrohstoffs und die Ablagerungen auf den Längsstreckwalzen deutlich verringert. So konnte ein Temperaturbereich gefunden werden, der die Herstellung der Folie im Produktionsmaßstab erlaubt. Es wurde gefunden, daß durch den Zusatz der Wachse, Polyethylene oder anderer Zusatzstoffe eine Längsstreckung bei einer Temperatur im Bereich des Schmelzpunktes des jeweiligen Deckschichtrohstoffs möglich ist. Bevorzugt wird eine Temperatur im Bereich von 10°C, vorzugsweise 5°C, ober- oder unterhalb des Schmelzpunktes des Copolymeren I gewählt.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im Wesentlichen unpolaren Polymermatrix entstehen.

Die Oberflächenbehandlung wie z.B. Corona-Behandlung kann sowohl sofort bei der Herstellung der Folie wie auch zu einem späteren Zeitpunkt, z.B. unmittelbar vor der Verarbeitung, erfolgen.

Die Folie kann zur Etikettierung von Behältern nach dem Thermolabelling-Verfahren eingesetzt werden. Thermolabelling ist im Sinne der vorliegenden Erfindung ein Etikettierverfahren, bei welchem das Etikett unter Einwirkung von Wärme (ohne zusätzliche Hilfsstoffe) auf ein vorher, d.h. in einem separaten Arbeitsschritt, hergestellten Behältnis aufgebracht wird. Eine überraschende Vielzahl von Behältermaterialien können mit der erfindungsgemäßen etikettiert werden, beispielsweise Glas, Weißblech, Aluminium oder auch thermoplastische Polymere.

Es ist nicht erforderlich, die Folie auf der Innenseite zusätzlich mit Haft- und Hilfsstoffen, Klebern oder Beschichtungen zu versehen. Es genügt die Einwirkung von Wärme und gegebenenfalls zusätzlich Druck, um die Folie mit ihrer inneren, d.h. ersten Deckschicht auf die Oberfläche der Behälterwand zu applizieren. Dabei kann entweder die Folie oder der bereits ausgeformte Behälter in einem nachgelagerten Verfahrensschritt (d.h. nach Behälterherstellung) auf einen geeigneten Temperaturbereich erhitzt werden, wobei der Behälter bei diesen Temperaturen möglichst formstabil bleiben sollte. Hilfreich kann die zusätzliche Anwendung eines geeigneten Anpreßdrucks zusammen mit der Einwirkung von Wärme sein. Der Anpreßdruck kann innerhalb weiter Grenzen variieren und ist von dem Verfahren und der Behaltnisform abhängig, (ist in der Regel >10N/cm²).

Gegebenenfalls kann die Folie als Etikett auch nur auf einer Teilfläche mit der Behälterwandung (Patch labeling) verbunden werden. Bei dieser Variante wird nach dem Stand der Technik ein Kleber auf das Etikett appliziert, das anschließend auf die Behälterwandung aufgebracht wird. Bei der erfindungsgemäßen Folie entfällt der Kleberauftrag. Auf ein Behältnis können so ein oder mehrere Etiketten aus der erfindungsgemäßen Folie aufgebracht werden.

Eine weitere Variante der nächträglichen Behälteretikettierung ist die Rundumetikettierung, bei welcher das Etikett in Form eines Streifens um den Behälter herumgewickelt und nach dem Stand der Technik lediglich an den Enden des Streifens mit der Behälterwandung bzw. mit sich selbst verbunden wird. Dies erfolgt durch Applikation eines Schmelzeklebers, der für die Haftung des Etikettes zum Behältnis bzw. des Etikettes gegen sich selbst sorgt, verbunden wird. Bei der erfindungsgemäßen Folie entfällt der Kleberauftrag.

Je nach der gewählten Verfahrensvariante kann es vorteilhaft sein, auch oder nur die Etikettenfolie vor der Applikation zu erhitzen. In diesen Fällen liegt der bevorzugte Temperaturbereich der inneren Folienoberfläche bei 70 bis 130°C, besonders bevorzugt bei 80 bis 125 °C. Überraschenderweise sind nur sehr niedrige Temperaturen erforderlich um mittels Thermolabelling eine gute Haftung des Etiketts zu erzeugen.

Je nach dem verwendeten Druckverfahren, dem Verfahren zur Herstellung der Behälter und der maschinellen Ausstattung am Ort der Etikettenapplikation können die Etiketten nach dem "Cut-in-Place"-Verfahren oder nach dem "Cut & Stack"-Verfahren zugeführt werden.

In einer weiteren Anwendung kann die erfindungsgemäße Folie auch als Bestandteil eines Laminats eingesetzt werden, welches seinerseits in der beschriebenen Weise als In-Mould oder Thermolabelling-Etikett verwendet werden kann. Die erfindungsgemäßen Folien bildet dann die Innenseite des Laminates, so daß erfindungsgemäß die Oberfläche der ersten Deckschicht dem Behältnis zugewandt ist und die gute Haftung auf dem Behälter sicherstellt. Typischerweise kommen auf der gegenüberliegenden Außenseite des Etiketts mehr oder weniger dünne, transparente Folien, insbesondere transparente BOPP-Folien zum Einsatz. Dabei befindet sich das Druckbild zwischen der inneren und der äußeren Folie. Die beiden Folien werden dabei mit einem geeigneten Kleber miteinander verklebt.

Bei der Anwendung als Verpackungsfolie, besonders bei leicht zerbrechlichen Packgütern wie Keksen muß eine Siegelung bereits bei niedrigen Siegeldrücken erfolgen. Daher wird hier eine Folie benötigt, die bereits bei möglichst geringen Siegeldrücken und -temperaturen eine außreichende Siegelnahtfestigkeit und -dichtigkeit gewährt, um das Packgut vor Schädlingsbefall und anderen störenden Fremdeinflüssen zu schützen. Zusätzlich wird die Außenseite von hochwertigen Folie oft mit einem Lack, wie PVDC und Acryllack überzogen, so dass hier eine Folie gefordert ist, die gegen sich selbst und sowie gegen diese Lacke siegelt. Eine solche Anwendungsform ist z. B. das Roll-wrap-Verfahren, für welches die erfindungsgemäße Folie ebenfalls hervorragend geeignet ist.

### Meßmethoden

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Die Erfindung wird nunmehr an Hand von Ausführungsbeispielen erläutert.

### Beispiel 1

Es wurde durch Coextrusion und anschließende stufenweise Orientierung in Längs- und Querrichtung eine opak-weiße vierschichtige Folie bestehend aus der Basisschicht C, einer inneren, ersten Deckschicht A, einer inneren, ersten Zwischenschicht B und einer äußeren, zweiten Deckschicht E mit einer Gesamtdicke von 60 µm hergestellt. Die erste Deckschicht A hatte eine Dicke von 2,0 µm und die zweite Deckschicht E eine Dicke von 0,7 µm, die erste Zwischenschicht B eine Dicke von 2µm. Die Schichten waren wie folgt zusammengesetzt:

### Basisschicht C:

| | |
|---|---|
| 91,74 Gew.-% | Propylenhomopolymer mit einem Schmelzpunkt von 165 °C und einem Schmelzflußindex von 3,4g/10min und einem Kettenisotaxie-Index von 94 % |
| 5,1 Gew.% | Calciumcarbonat |
| 2,8 Gew.% | Titandioxid (Rutil) |
| 0,10 Gew.-% | Erucasäureamid (Gleitmittel) |
| 0,10 Gew.-% | Armostat 300 (Antistatikum) |
| 0,03 Gew.-% | Neutralisationsmittel (CaCO3) |
| 0,13 Gew.-% | Stabilisator (Irganox) |

### Deckschicht A:

| | |
|---|---|
| 89,5 Gew.-% | Copolymer aus Ethylen und Methacrylester mit einem Ethylengehalt von 77 Ges.-% und einem Methacrylestergehalt von 23 Gew.-% bezogen auf das Copolymer. Der Schmelzflußindex betrug 8,0 g/10min [bei 190°C, 21,6N]. |
| 0,5 Gew.-% | SiO2 als Antiblockmittel mit einer mittleren Teilchengröße von 4 µm |
| 10,0 Gew.-% | Polyethylen-Wachs mit einem Molekulargewicht Mn (Zahlenmittel) von 2000 |

### Zwischenschicht B:

| | |
|---|---|
| 90,0 Gew.-% | Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [bei 190°C, 21,6N]. |
| 10,0 Gew.-% | Polyethylen-Wachs mit einem Molekulargewicht Mn (Zahlenmittel) von 2000 |

### Deckschicht E:

| | |
|---|---|
| 99,54 Gew.-% | statistisches Copolymer aus Ethylen und Propylen mit einem Schmelzflußindex von 6,0g/10min und einem Ethylengehalt von 6 Gew.-% bezogen auf das Copolymer |
| 0,22 Gew.-% | SiO2 als Antiblockmittel mit einer mittleren Teilchengröße von 4 µm |
| 0,20 Gew.-% | Stabilisator (Irganox 1010 / Irgafos 168) |
| 0,04 Gew.-% | Neutralisationsmittel (CaStearat) |

Die Herstellungsbedingungen in den einzelnen Verfahrensschritten waren:

| | | | |
|---|---|---|---|
| Extrusion: | Temperaturen | Basisschicht C: | 260 °C |
| | | Zwischenschicht B: | 235°C |
| | | Deckschicht A: | 230 °C |
| | | Deckschicht C: | 240°C |
| | Temperatur der Abzugswalze: | | 20 °C |
| Längsstreckung: | Temperatur: | | 100°C |
| | Längsstreckverhältnis: | | 1 : 4,5 |
| Querstreckung: | Temperatur: | | 165 °C |
| | Querstreckverhältnis: | | 1 : 9 |
| Fixierung: | Temperatur: | | 140 °C |
| | Konvergenz: | | 10 % |
| Druckvorbehandlung | Deckschicht | A Corona 10000V / 10000Hz | |
| | Deckschicht | C Corona 10000V / 10000Hz | |

Bei dem Querstreckverhältnis von 1:9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.
Die Folie wurde als Etikettenfolie für das Thermolabelling eingesetzt. Dabei wurde eine handelsübliche Glasflasche auf 60°C vorgewärmt und das Etikett bei 110°C mittels eines Handsiegelkolbens auf das Behältnis appliziert.

In einer weiteren Anwendung wurde die Folie als Verpackungsfolie eingesetzt und bei 110°C und 10N/cm2 und 0,5 sec gesiegelt. Es wurde eine Siegelnahtfestigkeit von 2,5 N/15mm erreicht.

### Beispiel 2

Es wurde eine vierschichtige weiß-opake Folie, wie in Beispiel 1 beschrieben, hergestellt. Im Unterschied zu Beispiel 1 wurden die Zusammensetzung der Deckschicht A und die Zwischenschicht B wie folgt geändert. Die übrigen Schichten und die Herstellungsbedingungen in den einzelnen Verfahrensschritten waren wie in Beispiel 1.

### Deckschicht A:

| | |
|---|---|
| 90,0 Gew.-% | Copolymer aus Ethylen und Methacrylester mit einem Ethylengehalt von 77 Gew.-% und einem Methacrylestergehalt von 23 Gew.-% bezogen auf das Copolymer. Der Schmelzflußindex betrug 8,0 g/10min [ bei 190°C, 21,6N]. |
| 10,0 Gew.-% | HDPE mit einem MFI von 15g/10min (190°C/2,16kg) und einem Schmelzpunkt von 133°C (DSC@10°C/min) |

### Zwischenschicht B:

| | |
|---|---|
| 100,0 Gew.-% | Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [ bei 190°C, 21,6N]. |

Die Folie wurde metallisiert und anschließend als Verpackungsfolie eingesetzt.

### Beispiel 3

Es wurde eine weiß-opake Folie wie in Beispiel 1 beschrieben hergestellt. Im Unterschied zu Beispiel 1 wurde in die Deckschicht A und in die Zwischenschicht B zusätzlich 10 Gew.-% HDPE eingearbeitet und der Gehalt an Copolymer entsprechend reduziert. Zusätzlich wurde eine Glanzzwischenschicht D mit einer Dicke von 4 µm aus reinem HomoPP, aufgebracht. Die Herstellungsbedingungen in den einzelnen Verfahrensschritten waren wie in Beispiel 1.

### Deckschicht A:

| | |
|---|---|
| 79,5 Gew.-% - | Copolymer aus Ethylen und Methacrylester mit einem Ethylengehalt von 77 Gew.-% und einem Methacrylestergehalt von 23 Gew.-% bezogen auf das Copolymer. Der Schmelzflußindex betrug 8,0 g/10min [ bei 190°C, 21,6N]. |
| 0,5 Gew.-% | SiO2 als Antiblockmittel mit einer mittleren Teilchengröße von 4 µm |
| 10,0 Gew.-% | Polyethylen-Wachs mit einem Molekulargewicht Mn (Zahlenmittel) von 2000 |
| 10,0 Gew.-% | HDPE mit einem MFI von 15g/10min (190°C / 2,16kg) und einem Schmelzpunkt von 133°C (DSC@10°C/min) |

### Zwischenschicht B:

| | |
|---|---|
| 80,0 Gew.-% | Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [ bei 190°C, 21,6N]. |
| 10,0 Gew.-% | Polyethylen-Wachs mit einem Molekulargewicht Mn (Zahlenmittel) von 2000 |
| 10,0 Gew.-% | HDPE mit einem MFI von 15g/10min (190°C / 2,16kg) und einem Schmelzpunkt von 133°C (DSC@10°C/min) |

Die Folie wurde als Etikettenfolie für das InMould-Labeling mit Polystyrol (Einspritztemperatur: ca.170°C) eingesetzt, wobei Haftfestigkeiten > 1,0N/15mm erreicht wurden.

### Beispiel 4

Es wurde eine Folie wie in Beispiel 3 beschrieben hergestellt. Im Unterschied zu Beispiel 3 wurde auf den Zusatz von Calciumcarbonat und Titandioxid in der Basisschicht verzichtet. Der Polypropylengehalt wurde entsprechend erhöht. Dadurch erhielt man eine transparente fünfschichtige Folie. Die Herstellungsbedingungen in den einzelnen Verfahrensschritten waren wie in Beispiel 3. Zusätzlich wurde die Zusammensetzung der Deckschicht A und der Zwischenschicht B wie folgt geändert:

### Deckschicht A:

| | |
|---|---|
| 89,5 Gew.-% | Copolymer aus Ethylen und Methacrylester mit einem Ethylengehalt von 77 Gew.-% und einem Methacrylestergehalt von 23 Gew.-% bezogen auf das Copolymer. Der Schmelzflußindex betrug 8,0 g/10min [ bei 190°C, 21,6N]. |
| 0,5 Gew.-% | SiO2 als Antiblockmittel mit einer mittleren Teilchengröße von 4 µm |
| 5,0 Gew.-% | Polyethylen-Wachs mit einem Molekulargewicht Mn (Zahlenmittel) von 2000 |
| 5,0 Gew.% | HDPE mit einem MFI von 15g/10min (190°C/2,16kg) und einem Schmelzpunkt von 133°C (DSC@10°C/min) |

### Zwischenschicht B:

| | |
|---|---|
| 90,0 Gew.-% | Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [ bei 190°C, 21,6N]. |
| 5,0 Gew.-% | Polyethylen-Wachs mit einem Molekulargewicht Mn (Zahlenmittel) von 2000 |
| 5,0 Gew.% | HDPE mit einem MFI von 15g/10min (190°C 12,16kg) und einem Schmelzpunkt von 133°C (DSC@10°C/min). |

Die Folie wurde zur Papierkaschierung eingesetzt, wie man sie z.B. zum Schutz von Dokumenten anwendet. Dabei wurde die transparent erfindungsgemäße Folie bei 110°C mit Hilfe üblicher Anpreßwalzen ohne zusätzlichen Einsatz eines Klebers auf Papier auflaminiert. Die Haftfestigkeit war dabei so hoch, dass das Papier bei dem Versuch Folie und Papier zu trennen spleißte.

### Beispiel 5

Es wurde eine weiß-opake fünfschichtige Folie wie in Beispiel 3 beschrieben hergestellt. Die Herstellungsbedingungen in den einzelnen Verfahrensschritten waren wie in Beispiel 3. Zusätzlich wurde die Zusammensetzung der Deckschicht A und der Zwischenschicht B wie folgt geändert:

### Deckschicht A:

| | |
|---|---|
| 49,5,0 Gew.-% | Copolymer aus Ethylen und Methacrylester mit einem Ethylengehalt von 77 Gew.-% und einem Methacrylestergehalt |
| | von 23 Gew.-% bezogen auf das Copolymer. Der Schmelzflußindex betrug 8,0 g/10min [ bei 190°C, 21,6N]. |
| 0,5 Gew.-% | SiO2 als Antiblockmittel mit einer mittleren Teilchengröße von 4 µm |
| 50,0 Gew. % | statistisches Copolymer aus Ethylen und Propylen mit einem Schmelzflußindex von 6,0g/10min und einem Ethylengehalt von 6 Gew.-% bezogen auf das Copolymer |

### Zwischenschicht B:

| | |
|---|---|
| 50,0 Gew.-% | Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [ bei 190°C, 21,6N]. |
| 50,0 Gew.-% | statistisches Copolymer aus Ethylen und Propylen mit einem Schmelzflußindex von 6,0g/10min und einem Ethylengehalt |
| von 6 Gew.-% | bezogen auf das Copolymer |

Auf Grund des hohen Copolymergehaltes, der die Haftfestigkeit der Folie absenkt, wurde die Folie als Schutzfolie für Glas eingesetzt. Dabei wurde die Folie bei 130°C mit einem Handsiegelkolben auf einer Glasscheibe befestigt. Die Folie ließ sich problemlos wieder abziehen, ohne zu spleißen oder teilweise auf der Glasoberfläche haften zu bleiben. Die Haftfestigkeit lag bei 0,4 N/15mm.

### Vergleichsbeispiel 1

Es wurde eine weiß-opake dreischichtige Folie, wie in Beispiel 1 beschrieben hergestellt, indem im Unterschied zu Beispiel 1 auf die Zwischenschicht B verzichtet wurde. Die Herstellungsbedingungen in den einzelnen Verfahrensschritten waren wie in Beispiel 1.

Die Folie wurde als Etikettenfolie für das Thermolabeiling eingesetzt. Dabei wurde eine handelsübliche Glasflasche auf 60°C vorgewärmt und versucht, das Etikett bei 110°C mittels eines Handsiegelkolbens auf das Behältnis appliziert. Trotz intensiver Bemühungen und stufenweiser Erhöhung der Temperatur bis auf 130°C konnte
keinerlei Haftung des Etikettes auf dem Glasbehältnis erreicht werden.

### Vergleichsbeispiel 2

Es wurde eine weiß-opake dreischichtige Folie, wie in Beispiel 1 beschrieben hergestellt, indem im Unterschied zu Beispiel 1 auf die Deckschicht A verzichtet wurde. Herstellungsbedingungen in den einzelnen Verfahrensschritten waren wie in Beispiel 1.

Die Folie wurde als Verpackungsfolie eingesetzt und bei 110°C und 10N/cm2 und 0,5 sec gesiegelt. Es wurde lediglich eine Siegelnahtfestigkeit von 1,3 N/15mm erreicht.

### Vergleichsbeispiel 3

Es wurde eine weiß-opake Folie, wie in Beispiel 1 beschrieben hergestellt. Im Unterschied zu Beispiel 1 auf jegliche Zumischung von Zusatzstoffen verzichtet. Die Herstellungsbedingungen in den einzelnen Verfahrensschritten waren wie in Beispiel 1. Auf Grund von starken Walzenablagerungen in der Längsstreckung konnte keine Folie hergestellt werden.

## Patentansprüche

1. Mehrschichtige biaxial orientierte Polyolefinfolie aus einer Basisschicht und mindestens einer ersten Zwischenschicht und einer auf dieser Zwischenschicht aufgebrachten ersten Deckschicht, **dadurch gekennzeichnet, daß** diese erste Zwischenschicht aus einem Terpolymeren aufgebaut ist, welches aus drei verschiedenen Monomeren (a), (b) und (c) besteht, wobei (a) ein Olefin und (b) eine ungesättigte Carbonsäure oder deren Ester und (c) eine von (b) verschiedene ungesättigte Carbonsäure oder ein Carbonsäureester oder ein Carbonsäureanhydrid ist und die erste Deckschicht ein Copolymer enthält, welches aus einem Olefin und einer ungesättigten Carbonsäure oder deren Estern besteht und diese erste Deckschicht zusätzlich einen Zusatzstoff enthält.

2. Folie gemäß Anspruch 1, **dadurch gekennzeichnet, daß** der Zusatzstoff in einer Menge von bis zu 30 Gew.-%, vorzugsweise 0,5 bis 10 Gew.-%, und das Copolymere in einer Menge von mindestens 70 Gew.-%, vorzugsweise 90 - 99,5 bezogen auf das Gewicht der Deckschicht, in der Deckschicht enthalten ist.

3. Folie gemäß Anspruch 1 oder 2, **dadurch gekennzeichnet, daß** der Zusatzstoff Polyethylen, Kohlenwasserstoffharz, EBA, EVA, EMA, Propylenhomopolymer, Co- oder Terpolymere aus Ethylen-, Propylen- und/oder Butyleneinheiten und/oder Wachs, vorzugsweise ein Polyethylenwachs, ein makrokristallines Paraffin oder eine mikrokristallines Wachs (Mikrowachs) ist.

4. Folie nach Anspruch 3, **dadurch gekennzeichnet, daß** das Wachs ein mittleres Molekulargewicht Mn (Zahlenmittel) Mn von 200 bis 5000, vorzugsweise 400 bis 2000 und das Wachs einen Schmelzpunkt von 70 bis 150°C aufweist.

5. Folie nach Anspruch 3, **dadurch gekennzeichnet, daß** das Polyethylen ein lineares oder verzweigtes Polyethylen ist, vorzugsweise ein HDPE, LDPE, LLDPE, MDPE oder VLDPE ist.

6. Folie nach Anspruch 3, **dadurch gekennzeichnet, daß** das Co -oder Terpolymer mindestens 50 Gew.-%, vorzugsweise, 75 bis 92 Gew.-% Propyleneinheiten enthält.

7. Folie gemäß einem oder mehreren der Ansprüche 1 bis 6, **dadurch gekennzeichnet, daß** das Copolymere I aus Ethylen-, Propylen- oder Buten-, Hexen- oder Octeneinheiten und Acrylsäure-, Methacrylsäure-, Acrylsäureester-, Methacrylsäureestereinheiten aufgebaut ist.

8. Folie nach Anspruch 7, **dadurch gekennzeichnet, daß** das Copolymere aus mindestens 60 - 97 Gew.-% Ethyleneinheiten und höchstens 3 - 40 Gew.-% Acrylsäureester- oder Methacrylsäureestereinheiten besteht.

9. Folie nach Anspruch 6 oder 7, **dadurch gekennzeichnet, daß** das Copolymere I einen Schmelzpunkt von 40 - 120 °C, einen Schmelzindex von 0,1-20 g/10min (bei 190°C und 21,6 N) hat.

10. Folie nach einem der Ansprüche 1 bis 9, **dadurch gekennzeichnet, daß** die erste Deckschicht zusätzlich ein anorganisches oder organisches Antiblockmittel, vorzugsweise SiO2, CaCO3, Polycarbonat, Polyamide, Polyester, vernetztes Silikonöl oder Polymethylmethacrylat , enthält.

11. Folie nach Anspruch 10, **dadurch gekennzeichnet, daß** das die erste Deckschicht 0,1 bis 5 Gew.-%, vorzugsweise 1 bis 4 Gew.-% Antiblockmittel enthält.

12. Folie nach Anspruch 10 oder 11, **dadurch gekennzeichnet, daß** das Antiblockmittel eine mittlere Teilchengröße von 1 bis 6 µm aufweist.

13. Folie einem der Ansprüche 1 bis 12, daß die erste Deckschicht eine Dicke von 1 bis 5 µm aufweist.

14. Folie nach einem der Ansprüche 1 bis 13 , **dadurch gekennzeichnet, daß** die Oberfläche der ersten Deckschicht mittels Corona, Flamme oder Plasma oberflächenbehandelt ist.

15. Folie gemäß einem oder mehreren der Ansprüche 1 bis 14, **dadurch gekennzeichnet, daß** die Monomeren (a), (b) und (c) aus den Gruppen
(a) Ethylen, Propylen, Buten, Hexen oder Octen
(b) Acrylsäure, Methacrylsäure, Acrylsäureester, Methacrylsäureester
(c) Glycidylmethacrylat oder Maleinsäureanhydrid.
ausgewählt werden.

16. Folie nach Anspruch 15, **dadurch gekennzeichnet, daß** das Terpolymere aus mindestens 65 - 96 Gew.-% Ethyleneinheiten und höchstens 3 - 34 Gew.-% Acrylsäureester- oder Methacrylsäureestereinheiten und 1 - 10 Gew.-% Glycidylmethacrylat oder Maleinsäureanhydrideinheiten besteht.

17. Folie nach Anspruch 15 oder 16, **dadurch gekennzeichnet, daß** das Terpolymere I einen Schmelzpunkt von 40 - 120 °C, einen Schmelzindex von 0,1-20g/10min (bei 190°C und 21,6N) hat.

18. Folie nach einem der Ansprüche 1 bis 15, **dadurch gekennzeichnet, daß** die Zwischenschicht einen Zusatzstoff in einer Menge von 0,5 bis 30 Gew.-% enthält.

19. Folie nach Anspruch 18, **dadurch gekennzeichnet, daß** der Zusatzstoff ein Wachs und/oder Polyethylen ist.

20. Folie einem der Ansprüche 1 bis 19, daß die erste Zwischenschicht eine Dicke von 1 bis 15 µm aufweist.

21. Folie nach einem der Ansprüche 1 bis 20, **dadurch gekennzeichnet, daß** die Folie eine zweite polyolefinische Deckschicht auf der gegenüberliegenden Oberfläche der Basisschicht aufweist.

22. Folie nach Anspruch 21, **dadurch gekennzeichnet, daß** das Polyolefin der zweiten Deckschicht ein Propylenhomopolymer und/oder ein Copolymer aus Ethylen-, Propylen oder Butyleneinheiten und/oder ein Terpolymer aus Ethylen-, Propylen und Butyleneinheiten enthält.

23. Folie nach einem der Ansprüche 21 oder 22, **dadurch gekennzeichnet, daß** unter der zweiten Deckschicht zusätzlich eine zweite polyolefinische Zwischenschicht angebracht ist.

24. Folie nach einem der Ansprüche 1 bis 22, **dadurch gekennzeichnet, daß** die Basisschicht transparent oder opak oder weiß opak ist.

25. Folie nach einem der 1 bis 24, **dadurch gekennzeichnet, daß** die Dicke der Folie 15 bis 150 µm, insbesondere 25 bis 90 µm beträgt, wobei die Basisschicht mindestens 40% der Gesamtdicke ausmacht.

26. Folie nach einem der Ansprüche 1 bis 25, **dadurch gekennzeichnet, daß** die Basisschicht Antistatikum, vorzugsweise tertiäres aliphatisches Amin, enthält.

27. Mehrschichtige biaxial orientierte Polyolefinfolie gemäß Auspruch 1 aus einer Basisschicht und mindestens einer ersten Zwischenschicht und einer auf dieser Zwischenschicht aufgebrachten ersten Deckschicht, **dadurch gekennzeichnet, daß** diese erste Zwischenschicht aus einem Terpolymeren aufgebaut ist, welches aus drei verschiedenen Monomeren (a), (b) und (c) besteht, wobei (a) ein Olefin und (b) eine ungesättigte Carbonsäure oder deren Ester und (c) ein von (b) verschiedener Carbonsäureester oder ein Carbonsäureanhydrid ist und die erste Deckschicht ein Copolymer enthält, welches aus einem Olefin und einer ungesättigte Carbonsäure oder deren Estern besteht und diese erste Deckschicht zusätzlich einen Zusatzstoff in einer Menge von 30 bis 50 Gew.-% enthält, wobei sich die Angaben in Gew.-% jeweils auf das Gewicht der Deckschicht beziehen.

28. Verwendung einer Folie nach einem der Ansprüche 1 bis 26 als Etikettenfolie.

29. Verwendung nach Anspruch 28, **dadurch gekennzeichnet, daß** kein zusätzlicher Kleber bei der Etikettierung verwendet wird.

30. Verwendung nach Anspruch 28 oder 29, **dadurch gekennzeichnet, daß** ein Behälter aus PS, PP, PE, PVC, PET, Glas Metall, vorzugsweise Aluminium oder Weißblech, etikettiert wird.

31. Verwendung nach Anspruch 30, **dadurch gekennzeichnet, daß** die Etikettierung der Behälter nach dem In-Mould-, Thermolabelling oder Patch-Labelling, Rundumetikettier-Verfahren erfolgt.

32. Verwendung einer Folie nach einem der Ansprüche 1 bis 26 als Deckelfolie.

33. Verwendung einer Folie nach einem der Ansprüche 1 bis 26 als Verpackungsfolie.

34. Verwendung einer Folie nach Anspruch 33 als Verpackungsfolie für pulverförmiges Packgut.

35. Verwendung nach Anspruch 33 oder 34, **dadurch gekennzeichnet, daß** die Folie zur Herstellung einer Verpackung gesiegelt wird und die Siegelung bei einer Temperatur von 70 bis 100 °C erfolgt.

36. Verwendung nach Anspruch 33, **dadurch gekennzeichnet, daß** die Oberfläche der ersten Deckschicht gegen PVDC- oder Acrylatlack gesiegelt wird.

37. Verwendung einer Folie nach einem der Ansprüche 1 bis 26 zur Laminierung oder Kaschierung.

38. Verwendung nach Anspruch 37, **dadurch gekennzeichnet, daß** die Laminierung der Folie gegen Papier, Holz, Metall, vorzugsweise Aluminium, oder thermoplastische Kunststofffolien erfolgt.

39. Verwendung einer Folie nach Anspruch 27 als Schutzfolie.

40. Verwendung nach Anspruch 39, **dadurch gekennzeichnet, daß** eine Glas-, Metall-, Keramik-, Kunststoff- oder Holzoberfläche geschützt wird.

41. Verwendung einer Folie nach einem der Ansprüche 1 bis 26 zur Bedruckung, Metallisierung oder Beschichtung, vorzugsweise Kaltsiegelkleberbeschichtungen.

42. Verfahren zur Herstellung einer Polyolefinfolie nach Anspruch 1 oder 27 nach dem Coextrusionsverfahren bei welchem die den einzelnen Schichten der Folie entsprechenden Schmelzen gleichzeitig und gemeinsam durch eine Flachdüse coextrudiert werden, die so erhaltene Folie zur Verfestigung auf einer oder mehreren Walze/n abgezogen, die mehrschichtige Folie anschließend gestreckt, die gestreckte Folie thermofixiert wird, **dadurch gekennzeichnet, daß** die Längstreckung der Folie mittels erwärmter Walzen erfolgt und die Temperatur bei der Längsstreckung in einem Bereich von 10°C ober- oder unterhalb des Schmelzpunktes des Copolymeren I der ersten Deckschicht variiert.

## Claims

1. A multilayered biaxially oriented polyolefin film of a base layer and at least one first interlayer and a first covering layer applied to this interlayer, **characterized in that** said first interlayer is composed of a terpolymer consisting of three different monomers (a), (b) and (c), (a) being an olefin and (b) being an unsaturated carboxylic acid or ester thereof, and (c) being an unsaturated carboxylic acid different from (b) or a carboxylic acid ester or a carboxylic acid anhydride, and the first covering layer comprising a copolymer consisting of an olefin and an unsaturated carboxylic acid or esters thereof and said covering layer additionally comprising an additive.

2. A film according to claim 1, **characterized in that** the additive is included in the covering layer in a quantity of up to 30% by weight, preferably 0.5 to 10% by weight, and the copolymer is included in the covering layer in a quantity of at least 70% by weight, preferably 90-99.5% by weight, based on the weight of the covering layer.

3. A film according to claim 1 or claim 2, **characterized in that** the additive is polyethylene, hydrocarbon resin, EBA, EVA, EMA, propylene homopolymer, copolymers or terpolymers of ethylene, propylene and/or butylene units and/or wax, preferably a polyethylene wax, a macrocrystalline paraffin or a microcrystalline wax (microwax).

4. A film according to claim 3, **characterized in that** the wax has an average molecular weight Mn (number average) of 200 to 5,000, preferably 400 to 2,000, and the wax has a melting point of 70 to 150 °C.

5. A film according to claim 3, **characterized in that** the polyethylene is a linear or branched polyethylene, preferably an HDPE, LDPE, LLDPE, MDPE or VLDPE.

6. A film according to claim 3, **characterized in that** the copolymer or terpolymer comprises at least 50% by weight, preferably 75 to 92% by weight, of propylene units.

7. A film according to one or more of claims 1 to 6, **characterized in that** copolymer I is composed of ethylene, propylene or butene, hexene or octene units and acrylic acid, methacrylic acid, acrylic acid ester, methacrylic acid ester units.

8. A film according to claim 7, **characterized in that** the copolymer consists of at least 60-97% by weight of ethylene units and at most 3-40% by weight of acrylic acid ester or methacrylic acid ester units.

9. A film according to claim 6 or claim 7, **characterized in that** copolymer I has a melting point of 40-120 °C, a melt flow index of 0.1-20 g/10 min (at 190 °C and 21.6 N).

10. A film according to any of claims 1 to 9, **characterized in that** the first covering layer additionally comprises an inorganic or organic antiblocking agent, preferably SiO₂, CaCO₃, polycarbonate, polyamides, polyesters, crosslinked silicone oil or poly(methyl methacrylate).

11. A film according to claim 10, **characterized in that** the first covering layer comprises 0.1 to 5% by weight, preferably 1 to 4% by weight, of antiblocking agent.

12. A film according to claim 10 or claim 11, **characterized in that** the antiblocking agent has an average particle size of 1 to 6 µm.

13. A film according to any of claims 1 to 12, **characterized in that** the first covering layer has a thickness of 1 to 5 µm.

14. A film according to any of claims 1 to 13, **characterized in that** the surface of the first covering layer is surface-treated by means of corona, flame or plasma.

15. A film according to one or more of claims 1 to 14, **characterized in that** monomers (a), (b) and (c) are selected from the groups
(a) ethylene, propylene, butene, hexene or octene
(b) acrylic acid, methacrylic acid, acrylic acid ester, methacrylic acid ester
(c) glycidyl methacrylate or maleic anhydride.

16. A film according to claim 15, **characterized in that** the terpolymer consists of at least 65-96% by weight of ethylene units and at most 3-34% by weight of acrylic acid ester or methacrylic acid ester units and 1-10% by weight of glycidyl methacrylate or maleic anhydride units.

17. A film according to claim 15 or claim 16, **characterized in that** terpolymer I has a melting point of 40-120 °C, a melt flow index of 0.1-20 g/10 min (at 190 °C and 21.6N).

18. A film according to any of claims 1 to 15, **characterized in that** the interlayer comprises an additive in a quantity of 0.5 to 30% by weight.

19. A film according to claim 18, **characterized in that** the additive is a wax and/or polyethylene.

20. A film according to any of claims 1 to 19, **characterized in that** the first interlayer has a thickness of 1 to 15 µm.

21. A film according to any of claims 1 to 20, **characterized in that** the film comprises a second polyolefinic covering layer on the opposite surface of the base layer.

22. A film according to claim 21, **characterized in that** the polyolefine of the second covering layer comprises a propylene homopolymer and/or a copolymer of ethylene, propylene or butylene units and/or a terpolymer of ethylene, propylene and butylene units.

23. A film according to any of claims 21 or 22, **characterized in that** below the second covering layer, a second polyolefinic interlayer is additionally placed.

24. A film according to any of claims 1 to 22, **characterized in that** the base layer is transparent or opaque or white opaque.

25. A film according to any of claims 1 to 24, **characterized in that** the thickness of the film is 15 to 150 µm, in particular 25 to 90 µm, the base layer accounting for at least 40 % of the total thickness.

26. A film according to any of claims 1 to 25, **characterized in that** the base layer comprises an antistatic agent, preferably a tertiary aliphatic amine.

27. A multilayered biaxially oriented polyolefin film according to claim 1 of a base layer and at least one first interlayer and a first covering layer applied to this interlayer, **characterized in that** said first interlayer is composed of a terpolymer consisting of three different monomers (a), (b) and (c), (a) being an olefin and (b) being an unsaturated carboxylic acid or ester thereof, and (c) being an carboxylic acid ester different from (b) or a carboxylic acid anhydride, and the first covering layer comprising a copolymer consisting of an olefin and an unsaturated carboxylic acid or esters thereof and said first covering layer additionally comprising an additive in a quantity of 30 to 50% by weight, each of the specifications in percent by weight being based on the weight of the covering layer.

28. The use of a film according to any of claims 1 to 26 as label film.

29. The use according to claim 28, **characterized in that** additional adhesive is not used during labeling.

30. The use according to claim 28 or claim 29, **characterized in that** a container of PS, PP, PE, PVC, PET, glass, metal, preferably aluminum or tinplate, is labeled.

31. The use according to claim 30, **characterized in that** labeling of the containers occurs by in-mold labeling, thermal labeling or patch labeling, wrap-around labeling methods.

32. The use of a film according to any of claims 1 to 26 as lidding film.

33. The use of a film according to any of claims 1 to 26 as packaging film.

34. The use of a film according to claim 33 as packaging film for powdered goods to be packaged.

35. The use according to claim 33 or claim 34, **characterized in that** the film is sealed to produce a packaging and the sealing occurs at a temperature of 70 to 100 °C.

36. The use according to claim 33, **characterized in that** the surface of the first cover layer is sealed against PVDC or acrylic lacquer.

37. The use of a film according to any of claims 1 to 26 for lamination.

38. The use according to claim 37, **characterized in that** lamination of the film occurs against paper, wood, metal, preferably aluminum, or thermoplastic plastic films.

39. The use of a film according to claim 27 as protective film.

40. The use according to claim 39, **characterized in that** a glass, metal, ceramic, plastic or wood surface is protected.

41. The use of a film according to any of claims 1 to 26 for printing, metallizing or coating, preferably cold seal adhesive coatings.

42. A method for producing a polyolefin film according to claim 1 or claim 27 by the coextrusion method in which the melts corresponding to the individual layers of the film are coextruded simultaneously and jointly through a flat film extrusion die, the film thus obtained is taken off on one or more rollers for solidification, the multilayered film is subsequently stretched, the stretched film is heat-set, **characterized in that** longitudinal stretching of the film occurs by means of heated rollers and the temperature varies during longitudinal stretching in a range of 10 °C above or below the melting point of copolymer I of the first covering layer.

## Revendications

1. Feuille en polyoléfine, multicouche et biaxialement orientée, ladite feuille étant constituée d'une couche de base et d'au moins une première couche intermédiaire et d'une première couche de couverture appliquée sur ladite couche intermédiaire, **caractérisée en ce que** ladite première couche intermédiaire est composée d'un terpolymère constitué de trois monomères différents (a), (b) et (c), (a) étant une oléfine et (b) étant un acide carboxylique insaturé ou un ester de ce dernier et (c) étant un acide carboxylique insaturé différent de (b) ou un ester d'un acide carboxylique ou un anhydride d'un acide carboxylique et que ladite première couche de couverture contient un copolymère constitué d'une oléfine et d'un acide carboxylique insaturé ou d'esters de ce dernier et que ladite première couche de couverture contient en outre un additif.

2. Feuille selon la revendication 1, **caractérisée en ce que** ladite couche de couverture contient ledit additif dans une quantité d'au plus 30 % en poids, de préférence comprise entre 0,5 et 10 % en poids, et ledit copolymère dans une quantité d'au moins 70 % en poids, de préférence comprise entre 90 et 99,5, par rapport au poids de la couche de couverture.

3. Feuille selon les revendications 1 ou 2, **caractérisée en ce que** ledit additif est du polyéthylène, une résine d'hydrocarbures, de l'EBA, de l'EVA, de l'EMA, de l'homopolymère de propylène, un co- ou terpolymère constitué unités d'éthylène, de propylène et/ou de butylène et/ou de la cire, s'agissant préférentiellement d'une cire de polyéthylène, d'une paraffine macrocristalline ou d'une cire microcristalline (microcire).

4. Feuille selon la revendication 3, **caractérisée en ce que** ladite cire présente une masse moléculaire moyenne Mn (moyenne en nombre) comprise entre 200 et 5000, de préférence entre 400 et 2000, et que ladite cire présente un point de fusion compris entre 70 et 150 °C.

5. Feuille selon la revendication 3, **caractérisée en ce que** ledit polyéthylène est un polyéthylène linéaire ou ramifié, s'agissant de préférence d'un PE-HD, d'un PE-BD, d'un PE-BDL, d'un PE-MD ou d'un PE-TBD.

6. Feuille selon la revendication 3, **caractérisée en ce que** ledit co- ou terpolymère contient au moins 50 % en poids, de préférence 75 à 92 % en poids, d'unités de propylène.

7. Feuille selon une ou plusieurs des revendications 1 à 6, **caractérisée en ce que** le copolymère I est composé d'unités d'éthylène, de propylène ou de butène, d'hexène ou d'octène et d'unités d'acide acrylique, d'acide méthacrylique, d'esters de l'acide acrylique, d'esters de l'acide méthacrylique.

8. Feuille selon la revendication 7, **caractérisée en ce que** ledit copolymère est constitué d'au moins 60 à 97 % en poids d'unités d'éthylène et d'au plus 3 à 40 % en poids d'unités esters de l'acide acrylique ou d'esters de l'acide méthacrylique.

9. Feuille selon les revendications 6 ou 7, **caractérisée en ce que** ledit copolymère I a un point de fusion compris entre 40 et 120 °C et un indice de fluidité compris entre 0,1 et 20 g/10 min (à 190 °C et 21,6 N).

10. Feuille selon l'une des revendications 1 à 9, **caractérisée en ce que** ladite première couche de couverture contient en outre un agent anti-adhérent inorganique ou organique, s'agissant préférentiellement de SiO2, de CaCO3, de polycarbonate, de polyamides, de polyesters, d'une huile silicone réticulée ou de polyméthylméthacrylate.

11. Feuille selon la revendication 10, **caractérisée en ce que** ladite première couche de couverture contient 0,1 à 5 % en poids, de préférence 1 à 4 % en poids, d'agent anti-adhérent.

12. Feuille selon les revendications 10 ou 11, **caractérisée en ce que** ledit agent anti-adhérent présente une taille moyenne des particules comprise entre 1 et 6 µm.

13. Feuille selon l'une des revendications 1 à 12, ladite première couche de couverture présentant une épaisseur comprise entre 1 et 5 µm.

14. Feuille selon une ou plusieurs des revendications 1 à 13, **caractérisée en ce que** la surface de la première couche de couverture a subi un traitement superficielle par corona, flamme ou plasma.

15. Feuille selon une ou plusieurs des revendications 1 à 14, **caractérisée en ce que** les monomères (a), (b) et (c) sont choisis dans les groupes
(a) éthylène, propylène, butène, hexène ou octène
(b) acide acrylique, acide méthacrylique, esters de l'acide acrylique, esters de l'acide méthacrylique
(c) méthacrylate de glycidyle ou anhydride maléique

16. Feuille selon la revendication 15, **caractérisée en ce que** ledit terpolymère est constitué d'au moins 65 à 96 % en poids d'unités d'éthylène et d'au plus 3 à 34 % en poids d'unités esters de l'acide acrylique ou d'esters de l'acide méthacrylique et de 1 à 10 % en poids d'unités de méthacrylate de glycidyle ou d'anhydride maléique.

17. Feuille selon les revendications 15 ou 16, **caractérisée en ce que** ledit terpolymère I a un point de fusion compris entre 40 et 120 °C et un indice de fluidité compris entre 0,1 et 20 g/10 min (à 190 °C et 21,6 N).

18. Feuille selon l'une des revendications 1 à 15, **caractérisée en ce que** ladite couche intermédiaire contient un additif dans une quantité comprise entre 0,5 et 30 % en poids.

19. Feuille selon la revendication 18, **caractérisée en ce que** ledit additif est une cire et/ou du polyéthylène.

20. Feuille selon l'une des revendications 1 à 19, ladite première couche intermédiaire présentant une épaisseur comprise entre 1 et 15 µm.

21. Feuille selon l'une des revendications 1 à 20, **caractérisée en ce que** la feuille présente une deuxième couche de couverture polyoléfinique sur la face opposée de la couche de base.

22. Feuille la revendication 21, **caractérisée en ce que** la polyoléfine de ladite deuxième couche de couverture contient un homopolymère de propylène et/ou un copolymère constitué d'unités d'éthylène, de propylène ou de butylène et/ou un terpolymère constitué d'unités d'éthylène, de propylène et de butylène.

23. Feuille selon l'une des revendications 21 ou 22, **caractérisée en ce que**, en outre, une deuxième couche intermédiaire polyoléfinique est disposée sous ladite deuxième couche de couverture.

24. Feuille selon l'une des revendications 1 à 22, **caractérisée en ce que** ladite couche de base est transparente ou opaque ou blanche opaque.

25. Feuille selon l'une des 1 à 24, **caractérisée en ce que** l'épaisseur de la feuille est comprise entre 15 et 150 µm, notamment entre 25 et 90 µm, ladite couche de base représentant au moins 40 % de l'épaisseur totale.

26. Feuille selon l'une des revendications 1 à 25, **caractérisée en ce que** ladite couche de base contient de l'agent antistatique, s'agissant préférentiellement d'une amine aliphatique tertiaire.

27. Feuille en polyoléfine, multicouche et biaxialement orientée, selon la revendication 1, ladite feuille étant constituée d'une couche de base et d'au moins une première couche intermédiaire et d'une première couche de couverture appliquée sur ladite couche intermédiaire, **caractérisée en ce que** ladite première couche intermédiaire est composée d'un terpolymère constitué de trois monomères différents (a), (b) et (c), (a) étant une oléfine et (b) étant un acide carboxylique insaturé ou un ester de ce dernier et (c) étant un ester d'acide carboxylique insaturé ou un anhydride d'acide carboxylique différent de (b) et que ladite première couche de couverture contient un copolymère constitué d'une oléfine et d'un acide carboxylique insaturé ou d'esters de ce dernier et que ladite première couche de couverture contient en outre un additif dans une quantité comprise entre 30 et 50 % en poids, les pourcentages en poids étant exprimés par rapport au poids de la couche de couverture.

28. Utilisation d'une feuille selon l'une des revendications 1 à 26 en tant que feuille d'étiquettes.

29. Utilisation selon la revendication 28, **caractérisée en ce qu'**aucun autre adhésif n'est utilisé lors de l'étiquetage.

30. Utilisation selon les revendications 28 ou 29, **caractérisée en ce qu'**un récipient en PS, PP, PE, PVC, PET, verre, métal, s'agissant préférentiellement d'aluminium ou de fer-blanc, est étiqueté.

31. Utilisation selon la revendication 30, **caractérisée en ce que** l'étiquetage desdits récipients est réalisé selon les procédés d'inmould, d'étiquetage thermique, d'étiquetage par collage classique ou d'étiquetage rotatif.

32. Utilisation d'une feuille selon l'une des revendications 1 à 26 en tant que feuille de couvercle.

33. Utilisation d'une feuille selon l'une des revendications 1 à 26 en tant que feuille d'emballage.

34. Utilisation d'une feuille selon la revendication 33 en tant que feuille d'emballage pour emballer des produits pulvérulents.

35. Utilisation selon les revendications 33 ou 34, **caractérisée en ce que** ladite feuille est scellée afin de réaliser un emballage et que le scellage est réalisé à une température comprise entre 70 et 100 °C.

36. Utilisation selon la revendication 33, **caractérisée en ce que** la surface de ladite première couche de couverture est scellée contre du vernis de PVDC ou d'acrylate.

37. Utilisation d'une feuille selon l'une des revendications 1 à 26 pour réaliser un contrecollage ou une doublure.

38. Utilisation selon la revendication 37, **caractérisée en ce que** ladite feuille est contrecollé contre du papier, du bois, du métal, s'agissant préférentiellement d'aluminium, ou des feuilles en matières synthétique thermoplastique.

39. Utilisation d'une feuille selon la revendication 27 en tant que feuille de protection.

40. Utilisation selon la revendication 39, **caractérisée en ce que** la surface protégée est en verre, en métal, en céramique, en matière plastique ou en bois.

41. Utilisation d'une feuille selon l'une des revendications 1 à 26 à des fins d'impression, de métallisation ou de revêtement, s'agissant préférentiellement de revêtements adhésifs à scellage à froid.

42. Procédé de fabrication d'une feuille en polyoléfine selon les revendications 1 ou 27 selon le procédé de coextrusion, les différentes masses fondues correspondant à chacune des couches de ladite feuille étant co-extrudées ensemble et simultanément à travers une filière plate, la feuille ainsi obtenue étant déroulée sur un ou plusieurs cylindres afin de la solidifier, la feuille multicouche étant ensuite étirée pour thermofixer ladite feuille étirée, **caractérisé en ce que** l'étirage en longueur de la feuille est réalisé au moyen de cylindres chauffés et que, lors de l'étirage en longueur, la température varie dans une fourchette allant de 10 °C de moins à 10 °C de plus que le point de fusion du copolymère I de la première couche de couverture.
